# EUROPÄISCHE PATENTANMELDUNG

(11) **EP 4 744 994 A1**
(43) Veröffentlichungstag der Anmeldung: **20.05.2026**
(21) Anmeldenummer: 25213235.2
(22) Anmeldetag: 04.11.2025
(51) Int. Cl.: B60W 30/18, B60W 50/14, B60W 50/16

(54) **VERFAHREN ZUM BETREIBEN EINES ASSISTENZSYSTEMS EINES KRAFTFAHRZEUGS, COMPUTERPROGRAMMPRODUKT SOWIE ASSISTENZSYSTEM**

(30) Priorität: 14.11.2024 DE 102024133373
(71) Anmelder: Volkswagen Aktiengesellschaft, 38440 Wolfsburg (DE)
(72) Erfinder: Banaskiewicz, Kevin, 38440 Wolfsburg (DE)

(57) **Zusammenfassung**

Die Erfindung betrifft ein Verfahren zum Betreiben eines Assistenzsystems (2) eines Kraftfahrzeugs (1), mit den Schritten: Bestimmen eines Stillstands des Kraftfahrzeugs (1) in einem aktiven Fahrbetrieb des Kraftfahrzeugs (1) mittels einer elektronischen Recheneinrichtung (3) des Assistenzsystems (2); Erfassen einer Nicht-Betätigung einer Bremsbetätigungseinrichtung (10) des Kraftfahrzeugs (1) während des Stillstands mittels einer Erfassungseinrichtung (4) des Assistenzsystems (2); Erfassen einer Blickabwendung (11) eines Fahrers (12) des Kraftfahrzeugs (1) von einer Fahraufgabe während des Stillstands über einen vorgegebenen Zeitraum mittels einer weiteren Erfassungseinrichtung (5) des Assistenzsystems (2); Erzeugen eines Steuersignals (13) für zumindest eine Funktionseinrichtung (6) des Assistenzsystems (2) in Abhängigkeit von der erfassten Nicht-Betätigung und der erfassten Blickabwendung (11) mittels der elektronischen Recheneinrichtung (3); und Ansteuern der Funktionseinrichtung (6) in Abhängigkeit von dem erzeugten Steuersignal (13). Ferner betrifft die Erfindung ein Computerprogrammprodukt sowie ein Assistenzsystem (2).

## Beschreibung

Die nachfolgende Erfindung betrifft ein Verfahren zum Betreiben eines Assistenzsystems eines Kraftfahrzeugs gemäß dem geltenden Patentanspruch 1. Ferner beschreibt die Erfindung ein entsprechendes Computerprogrammprodukt sowie ein entsprechendes Assistenzsystem.

Kommt ein Kraftfahrzeug zum Stillstand, werden oft Aktivitäten durch den Fahrer durchgeführt, die ihn ablenken und nicht mehr auf die Straßen blicken lassen. Beispiele hierfür sind das Durchsuchen eines Rucksacks auf der Rücksitzbank oder das Aufheben eines Gegenstands im Fußraum des Beifahrersitzes. In diesen Situationen kommt es in beispielsweise Automatik- und Elektrofahrzeugen vor, dass der Fahrer den Fuß von der Bremse löst und unbewusst losrollt, falls das "Autohold" nicht aktiviert ist. Im Falle eines aktivierten Fahrerassistenzsystems zum Abstand- und Geschwindigkeitshalten kann dieses das Fahrzeug in den meisten Fahrzeugen bis zum Stillstand bremsen und erneut anfahren, sobald das Vorderfahrzeug losfährt, unter der Prämisse, dass die Hände sich am Lenkrad befinden. In beiden Fällen kann das Anfahren zu gefährlichen Situationen führen, vor allem, wenn sich Hindernisse wie andere Verkehrsteilnehmer vor dem Fahrzeug befinden.

Die DE 10 2021 128 255 A1 umfasst eine Vorrichtung und ein Verfahren zur sicherheitsoptimierten Steuerung von Infotainmentinhalten im Fahrzeug. Die Vorrichtung umfasst eine Ermittlungseinheit, die eingerichtet ist, eine Anforderung zur Aktivierung fahrfremder Infotainmentinhalte im Fahrzeug zu erfassen; und eine Basisvoraussetzung zur Aktivierung fahrfremder Infotainmentinhalte im Fahrzeug zu ermitteln. Die Vorrichtung umfasst zudem eine Steuereinheit, die bei erfasster Anforderung zur Aktivierung fahrfremder Infotainmentinhalte im Fahrzeug und bei ermittelter Basisvoraussetzung durch die Ermittlungseinheit eingerichtet ist, eine Sicherheitsfunktion im Fahrzeug automatisch zu aktivieren, wobei die Sicherheitsfunktion im Fahrzeug für die Aktivierung fahrfremder Infotainmentinhalte für einen Fahrer des Fahrzeugs vorgebbar ist; und nach Aktivierung der Sicherheitsfunktion im Fahrzeug fahrfremde Infotainmentinhalte für den Fahrer des Fahrzeugs entsprechend der erfassten Anforderungen auszugeben.

Die JP 2003 312 455 A beschreibt einen Seitenbremsschalter, eine Alarmlampe, einen Alarmsummer und einen Rückhalteerkennungsschalter, welche in Reihe zwischen einer Batterie eines Kraftfahrzeugs und einer Erde desselben angeschlossen sind. Wenn ein Fahrer das Fahrzeug anhält und eine Seitenbremse betätigt, werden nicht nur der Erfassungsschalter, sondern auch der Seitenbremsschalter eingeschaltet, und der Alarmsummer und die Alarmlampe werden von der Batterie mit Strom versorgt, um Alarme auszugeben. Die Aufmerksamkeit des Fahrers wird durch das Aufflackern der Alarmlampe auf den Fahrersitz auf den Einbau des Radanschlagblocks gelenkt. Die gleiche Aufmerksamkeit wird durch einen Alarmton des Alarmsummers erregt, auch wenn sich der Fahrer nicht auf dem Sitz befindet. Der zu setzende Radanschlagblock wird dadurch vor dem Vergessen bewahrt.

Nachteilig am Stand der Technik ist weiterhin, dass bei einer Blickabwendung des Fahrers und bei einer Nicht-Betätigung des Bremspedals bei einem beispielsweise Automatikfahrzeug ein Losrollen des Kraftfahrzeugs nicht verhindert werden kann und es somit zu einer gefährlichen Verkehrssituation kommen kann.

Aufgabe der vorliegenden Erfindung ist es, ein Verfahren, ein Computerprogrammprodukt sowie ein Assistenzsystem zu schaffen, mittels welchen die Sicherheit im Straßenverkehr erhöht werden kann.

Diese Aufgabe wird durch ein Verfahren, ein Computerprogrammprodukt sowie durch ein Assistenzsystem gemäß den unabhängigen Patentansprüchen gelöst. Vorteilhafte Ausgestaltungsformen sind in den Unteransprüchen angegeben.

Ein Aspekt der Erfindung betrifft dabei ein Verfahren zum Betreiben des Assistenzsystems eines Kraftfahrzeugs. Es erfolgt das Bestimmen eines Stillstands des Kraftfahrzeugs in einem aktiven Fahrbetrieb des Kraftfahrzeugs mittels einer elektronischen Recheneinrichtung des Assistenzsystems. Es wird eine Nicht-Betätigung einer Bremsbetätigungseinrichtung des Kraftfahrzeugs während des Stillstands mittels einer Erfassungseinrichtung des Assistenzsystems erfasst. Es wird eine Blickabwendung eines Fahrers des Kraftfahrzeugs von der Fahraufgabe während des Stillstands über einen vorgegebenen Zeitraum mittels einer weiteren Erfassungseinrichtung des Assistenzsystems erfasst. Es erfolgt das Erzeugen eines Steuersignals für zumindest eine Funktionseinrichtung des Assistenzsystems in Abhängigkeit von der erfassten Nicht-Betätigung und der erfassten Blickabwendung mittels der elektronischen Recheneinrichtung und ein Ansteuern der Funktionseinrichtung in Abhängigkeit von dem erzeugten Steuersignal.

Somit ist es beispielsweise möglich, dass bei einem Automatik-betriebenen Kraftfahrzeug beziehungsweise beim Elektrofahrzeug ein Losrollen des Kraftfahrzeugs verhindert werden kann beziehungsweise zumindest eine Warnung beim Losrollen initiiert werden kann. Insbesondere bei einer Blickabwendung, beispielsweise beim "nach hinten Schauen" des Fahrers, kann somit verhindert werden, dass eine gefährliche Situation entsteht, indem beispielsweise das Kraftfahrzeug im Wesentlichen automatisch losfährt und beispielsweise einem anderen Kraftfahrzeug auffährt beziehungsweise Fußgänger oder Fahrradfahrer beeinträchtigen kann.

Somit können zuverlässig Verkehrssituationen verhindert werden, bei welchen eine Blickabwendung von der Fahraufgabe, insbesondere zur Straße beziehungsweise zur Umgebung des Kraftfahrzeugs, zu verzeichnen ist und ein Losrollen/Anfahren des Kraftfahrzeugs durchgeführt werden würde. Dies führt zu einem verbesserten und sicheren Straßenbetrieb des Kraftfahrzeugs.

Insbesondere kann ferner vorgesehen sein, sollte beispielsweise die Betätigung des Bremspedals weiterhin vorliegen, dass die Funktionseinrichtung nicht angesteuert wird. Des Weiteren kann, wenn der Fahrer seinen Blick wieder auf die Straße/Umgebung zur Erfüllung der Fahraufgabe richtet, ebenfalls die Ansteuerung der Funktionseinrichtung unterdrückt werden.

Das Kraftfahrzeug kann dabei sowohl manuell betrieben sein, jedoch insbesondere zumindest ein Automatikgetriebe aufweisen beziehungsweise elektrisch angetrieben sein. Ferner kann das Kraftfahrzeug auch ein Assistenzsystem aufweisen, welches zum zumindest teilweise automatisierten Betrieb ausgebildet ist. Beispielsweise kann das Assistenzsystem dann zum Eingreifen in zumindest eine Längsbeschleunigungseinrichtung beziehungsweise Bremseinrichtung ausgebildet sein. Beispielsweise kann das Assistenzsystem als sogenanntes Active Cruise Control-System (ACC) ausgebildet sein.

Beispielsweise kann als Erfassungseinrichtung ein Bremsdrucksensor oder auch eine optische Erfassungseinrichtung in der Nähe des Bremspedals genutzt werden, um die Nicht-Betätigung zu erfassen. Als weitere Erfassungseinrichtung können beispielsweise Innenraumkameras beziehungsweise Fahrerkameras genutzt werden, um die Blickabwendung des Fahrers bestimmen zu können.

Gemäß einer vorteilhaften Ausgestaltungsform wird eine Warneinrichtung als Funktionseinrichtung zum Warnen des Fahrers angesteuert. Insbesondere, wenn somit eine Blickabwendung erfasst wurde und gleichzeitig die Nicht-Betätigung des Bremspedals erfasst wurde, so kann der Fahrer bewarnt werden, dass ein Losrollen des Kraftfahrzeugs beziehungsweise Anfahren des Kraftfahrzeugs initiiert wird und somit kann dieser eine Information erhalten, dass dieser wieder die Fahraufgabe entsprechend übernehmen muss. Somit kann eine gefährliche Verkehrssituation verhindert werden.

Weiterhin vorteilhaft ist, wenn eine akustische Warnung mittels der Warneinrichtung erzeugt wird. Beispielsweise kann ein entsprechendes Piep-Signal beziehungsweise auch entsprechende Sprachausgaben genutzt werden, um den Fahrer somit zuverlässig warnen zu können. Somit kann auf einfache Art und Weise auf bereits bestehende Mittel im Kraftfahrzeug zurückgegriffen werden und der Fahrer bewarnt werden.

In einer weiteren vorteilhaften Ausgestaltung ist vorgesehen, dass eine haptische Warnung mittels der Warneinrichtung erzeugt wird. Beispielsweise kann an einem Lenkrad eine Vibration erzeugt werden. Ferner kann beispielsweise auch eine Sitzeinrichtung, in welchem der Fahrer sitzt, entsprechend vibrieren, sodass dieser bewarnt wird, dass ein Losfahren des Kraftfahrzeugs initiiert wurde.

In einer weiteren vorteilhaften Ausgestaltungsform kann eine Auto-Holdfunktion des Kraftfahrzeugs als Funktionseinrichtung angesteuert werden. Insbesondere wird somit ein Losfahren beziehungsweise Anfahren des Kraftfahrzeugs unterdrückt, wenn eine Nicht-Betätigung des Bremspedals vorliegt und gleichzeitig der Fahrer eine Blickabwendung durchgeführt hat. Bei der Auto-Holdfunktion handelt es sich insbesondere um eine bereits in Kraftfahrzeugen etablierte Funktion, welche als Erweiterung der herkömmlichen Feststellbremse dient, um das Kraftfahrzeug entsprechend bremsen zu können, ohne dass der Fahrer die Bremse während des Haltens am Fußpedal festhalten muss. Diese Funktion arbeitet elektronisch und nutzt meistens die gleiche Bremse wie die sogenannte Servicebremse beziehungsweise Fußbremse. Sobald der Fahrer das Bremspedal betätigt, um das Kraftfahrzeug anzuhalten, wird die Bremskraft elektronisch gehalten, auch wenn der Fahrer den Fuß beziehungsweise die Bremskraft reduziert. Das Kraftfahrzeug bleibt somit sicher stehen, ohne dass es rollen oder wegrollen kann. Als zusätzliche Funktion kann nun, auch bei einer Nicht-Betätigung der Bremspedaleinrichtung, die Auto-Holdfunktion gestartet werden, um ein entsprechendes Losrollen des Kraftfahrzeugs zu verhindern.

Ebenfalls vorteilhaft ist, wenn während des Stillstands des Kraftfahrzeugs eine Umgebung des Kraftfahrzeugs überwacht wird und eine Risikobewertung einer aktuellen Verkehrssituation in Abhängigkeit von der Überwachung durchgeführt wird. Beispielsweise kann eine Risikobewertung dahingehend durchgeführt werden, ob ein Losrollen des Kraftfahrzeugs eine gefährliche Situation bewirkt oder nicht. Hierzu können entsprechende Sensoren des Kraftfahrzeugs zur Umgebungserfassung, beispielsweise Kamerasensoren, LIDAR-Sensoren, Radarsensoren oder Ultraschallsensoren, verwendet werden. Des Weiteren können beispielsweise Kreuzungsbeobachtungen, Personenbeobachtung, Fahrradbeobachtung oder weitere Kraftfahrzeugbeobachtungen, genutzt werden, um eine Risikobewertung durchzuführen. Ebenfalls kann eine Navigationseinrichtung dazu genutzt werden, um zu bestimmen, in welcher Verkehrssituation sich das Kraftfahrzeug gerade befindet, beispielsweise ob sich das Kraftfahrzeug gerade in der Stadt, auf einer Landstraße oder auf einer Autobahn befindet. Insbesondere kann dabei beispielsweise mithilfe der Sensorik sowie der Lokalisierung geprüft werden, ob sich beispielsweise ein Hindernis vor dem Kraftfahrzeug befindet, oder ob das Kraftfahrzeug das erste an einem Bahnübergang oder einer Ampel ist. Gegebenenfalls kann hier ebenfalls noch mit einbezogen werden, ob die Schranken geschlossen sind beziehungsweise die Ampel rot zeigt. Somit kann auch die Umgebungsüberwachung dazu genutzt werden, um eine entsprechende Ansteuerung der Funktionseinrichtung durchzuführen.

Es hat sich weiterhin als vorteilhaft erwiesen, wenn in Abhängigkeit von der Risikobewertung entschieden wird, welche Funktionseinrichtung bei zumindest zwei Funktionseinrichtungen angesteuert wird. Sollte beispielsweise eine ungefährliche Verkehrssituation vorliegen, so kann lediglich eine Bewarnung des Fahrers durchgeführt werden, beispielsweise durch ein akustisches oder haptisches Warnsignal. Sollte jedoch eine gefährliche Verkehrssituation vorliegen und beispielsweise das Losrollen beziehungsweise Anfahren des Kraftfahrzeugs eine potentielle Kollision verursachen, so kann die Auto-Holdfunktion angesteuert werden beziehungsweise ein Anfahren und Losfahren des Kraftfahrzeugs unterdrückt werden. Somit kann je nach Verkehrssituation zuverlässig eine korrekte Entscheidung getroffen werden, welche Funktionseinrichtung anzusteuern ist.

Eine weitere vorteilhafte Ausgestaltungsform sieht vor, dass in Abhängigkeit von dem Betriebsmodus des Assistenzsystems entschieden wird, welche Funktionseinrichtung bei zumindest zwei Funktionseinrichtungen angesteuert wird. Unter Betriebsmodus kann beispielsweise der manuelle Betrieb des Kraftfahrzeugs beziehungsweise der zumindest teilweise assistierte Betrieb des Kraftfahrzeugs angesehen werden. Sollte beispielsweise der manuelle Betrieb eingestellt sein, so kann eine Bewarnung des Kraftfahrzeugführers durchgeführt werden. Sollte jedoch der assistierte Betrieb eingestellt sein, so kann beispielsweise ein Losrollen des Kraftfahrzeugs verhindert werden und eine Bewarnung des Kraftfahrzeugführers durchgeführt werden. Somit kann situationsspezifisch entschieden werden, welche Funktionseinrichtung wie anzusteuern ist.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Weiterhin betrifft die Erfindung auch ein computerlesbares Speichermedium mit zumindest dem Computerprogrammprodukt nach dem vorhergehenden Aspekt.

Des Weiteren betrifft die Erfindung auch ein Assistenzsystem für ein Kraftfahrzeug, mit zumindest einer elektronischen Recheneinrichtung, einer Erfassungseinrichtung, einer weiteren Erfassungseinrichtung und einer Funktionseinrichtung, wobei das Assistenzsystem zum Durchführen eines Verfahrens nach dem vorhergehenden Aspekt ausgebildet ist. Insbesondere wird das Verfahren mittels des Assistenzsystems durchgeführt.

Weiterhin betrifft die Erfindung auch noch ein Kraftfahrzeug mit einem Assistenzsystem nach dem vorhergehenden Aspekt. Das Kraftfahrzeug kann dabei sowohl manuell als auch zumindest teilweise assistiert betrieben sein. Ferner kann das Kraftfahrzeug mit einem Verbrennungsmotor oder mit einem Elektromotor oder auch einer Hybridfunktion entsprechend ausgestattet sein.

Vorteilhafte Ausgestaltungsformen des Verfahrens sind als vorteilhafte Ausgestaltungsformen des Computerprogrammprodukts, des Assistenzsystems sowie des Kraftfahrzeugs anzusehen. Das Assistenzsystem sowie das Kraftfahrzeug weisen hierzu gegenständliche Merkmale auf, um entsprechende Verfahrensschritte durchführen zu können.

In der vorliegenden Offenbarung kann eine Recheneinheit/elektronische Recheneinrichtung beispielsweise als ein Datenverarbeitungsgerät mit Verarbeitungsschaltkreisen verstanden werden. Eine Recheneinheit kann also Rechenoperationen durchführen, um Daten zu verarbeiten. Die Rechenoperationen können auch indizierte Zugriffe auf eine Datenstruktur, beispielsweise eine Nachschlagetabelle, LUT (englisch: look-up table), umfassen.

Eine Recheneinheit kann insbesondere einen oder mehrere Computer, einen oder mehrere Mikrocontroller und/oder einen oder mehrere integrierte Schaltkreise, beispielsweise einen oder mehrere anwendungsspezifische integrierte Schaltkreise, ASIC ASIC (englisch: applicationspecific integrated circuit), ein oder mehrere feldprogrammierbare Gate-Arrays, FPGA, und/oder ein oder mehrere Einchipsysteme, SoC (englisch: system on a chip), umfassen. Die Recheneinheit kann auch einen oder mehrere Prozessoren enthalten, beispielsweise einen oder mehrere Mikroprozessoren, eine oder mehrere Zentraleinheiten, CPU (englisch: central processing unit), eine oder mehrere Grafikverarbeitungseinheiten, GPU (englisch: graphics processing unit), und/oder einen oder mehrere Signalprozessoren, insbesondere einen oder mehrere digitale Signalprozessoren, DSP. Die Recheneinheit kann auch einen physischen oder virtuellen Cluster von Computern oder andere der genannten Einheiten umfassen.

Eine Recheneinheit kann auch eine oder mehrere Hardware- und/oder Software-Schnittstellen und/oder eine oder mehrere Speichereinheiten beinhalten. Dabei kann eine Speichereinheit als flüchtiger Datenspeicher, beispielsweise als dynamischer Direktzugriffsspeicher, DRAM (englisch: dynamic random access memory), oder statischer Direktzugriffsspeicher, SRAM (englisch: static random access memory), oder als nichtflüchtiger Datenspeicher, beispielsweise als Festwertspeicher, ROM (englisch: read-only memory), programmierbarer Festwertspeicher PROM, (englisch: programmable read-only memory), ausgeführt sein, ein löschbarer programmierbarer Festwertspeicher, EPROM (englisch: erasable programmable read-only memory), ein elektrisch löschbarer programmierbarer Festwertspeicher, EEPROM (englisch: electrically erasable programmable read-only memory), ein Flash-Speicher oder Flash-EEPROM, ein ferroelektrischer Direktzugriffsspeicher, FRAM (englisch: ferromagnetic random access memory), ein magnetoresistiver Direktzugriffsspeicher, MRAM (englisch: magnetoresistive random access memory), oder ein Phasenwechsel-Direktzugriffsspeicher, PCRAM (englisch: phase-change random access memory).

Assistenzsysteme für Kraftfahrzeuge sind elektronische Systeme, die den Fahrer bei der Fahrt unterstützen und das Fahren sicherer machen sollen. Die Stufen der Automatisierung von Assistenzsystemen werden vom Society of Automotive Engineers (SAE) in sechs Level eingeteilt, wobei Level 0 keine Automatisierung und Level 5 vollständige Automatisierung bedeutet.

SAE Level 1: Fahrerassistenz; Auf diesem Level übernimmt das Assistenzsystem nur bestimmte Aufgaben des Fahrers, während dieser die Kontrolle über das Fahrzeug behält. Ein Beispiel ist ein Spurhaltesystem, das den Fahrer warnt, wenn er die Spur verlässt und bei Bedarf korrigierend eingreift.

SAE Level 2: Teilautomatisierung; Auf diesem Level übernimmt das Assistenzsystem mehrere Funktionen gleichzeitig, wie z.B. Lenkung, Beschleunigung und Bremsen. Der Fahrer muss aber weiterhin die Aufmerksamkeit auf die Straße richten und jederzeit eingreifen können. Ein Beispiel ist ein adaptives Tempomat mit Spurhalteassistent, der das Fahrzeug in der Mitte der Fahrspur hält und den Abstand zum vorausfahrenden Fahrzeug einhält.

SAE Level 3: Bedingte Automatisierung; Auf diesem Level kann das Assistenzsystem die Kontrolle über das Fahrzeug übernehmen, allerdings nur unter bestimmten Voraussetzungen und Bedingungen. Der Fahrer muss nicht mehr ständig auf die Straße achten, sollte aber in der Lage sein, jederzeit wieder die Kontrolle zu übernehmen. Ein Beispiel ist ein Abstandsregeltempomat mit Spurwechselassistent, der auch Überholvorgänge selbstständig durchführen kann.

Es ist wichtig zu beachten, dass auf SAE Level 1 und 2 der Fahrer weiterhin die Verantwortung für das Fahrzeug und die Sicherheit hat. Auf SAE Level 3 übernimmt das Assistenzsystem zwar mehr Kontrolle, aber der Fahrer muss in der Lage sein, jederzeit einzugreifen.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Zu der Erfindung gehören auch Weiterbildungen des erfindungsgemäßen Assistenzsystems und des Kraftfahrzeugs, die Merkmale aufweisen, wie sie bereits im Zusammenhang mit Weiterbildungen des erfindungsgemäßen Verfahrens beschrieben worden sind. Aus diesem Grund sind die entsprechenden Weiterbildungen des erfindungsgemäßen Assistenzsystems und des Kraftfahrzeugs hier nicht noch einmal beschrieben.

Die Erfindung umfasst auch die Kombinationen der Merkmale der beschriebenen Ausführungsformen.

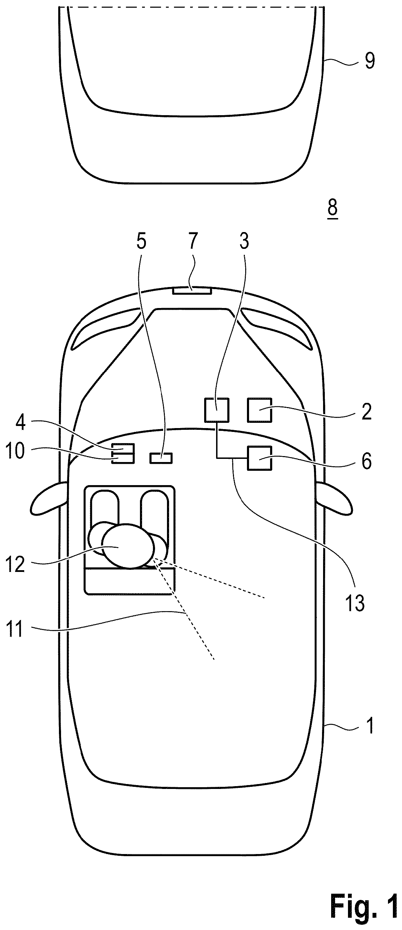

Im Folgenden werden Ausführungsbeispiele der Erfindung beschrieben. Hierzu zeigt die einzige Fig. 1 eine schematische Draufsicht auf eine Ausführungsform eines Kraftfahrzeugs mit einer Ausführungsform eines Assistenzsystems.

Bei dem im Folgenden erläuterten Ausführungsbeispiel handelt es sich um ein bevorzugtes Ausführungsbeispiel der Erfindung. Bei dem Ausführungsbeispiel stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsbeispiele auch durch weitere der bereits beschriebenen Merkmale der Erfindung ergänzbar.

In den Figuren sind funktionsgleiche Elemente jeweils mit denselben Bezugszeichen versehen.

Fig. 1 zeigt eine Ausführungsform eines Kraftfahrzeugs 1 mit einem Assistenzsystem 2 in einer Draufsicht. Das Assistenzsystem 2 weist zumindest eine elektronische Recheneinrichtung 3, eine Erfassungseinrichtung 4, eine weitere Erfassungseinrichtung 5 sowie eine Funktionseinrichtung 6 auf. Ferner weist das Kraftfahrzeug 1 eine Umgebungserfassungseinrichtung 7 auf. In einer Umgebung 8 des Kraftfahrzeugs 1 befindet sich vorliegend vor dem Kraftfahrzeug 1 ein weiteres Kraftfahrzeug 9. Das Assistenzsystem 2 kann neben den nachfolgend beschriebenen Aufgaben auch beispielsweise für einen zumindest teilweise assistierten Betrieb des Kraftfahrzeugs 1 ausgebildet sein und entsprechend in eine Längsbeschleunigungseinrichtung und Querbeschleunigungseinrichtung des Kraftfahrzeugs 1 eingreifen beziehungsweise zumindest entsprechende Steuersignale dafür erzeugen.

Gemäß einer Ausführungsform des Verfahrens erfolgt ein Bestimmen eines Stillstands des Kraftfahrzeugs 1 in einem aktiven Fahrbetrieb des Kraftfahrzeugs 1 mittels der elektronischen Recheneinrichtung 3. Beispielsweise kann auf Basis einer Umgebungserfassung der Stillstand beziehungsweise auf Basis von GPS-Signalen der Stillstand des Kraftfahrzeugs 1 entsprechend bestimmt werden.

Es erfolgt ein Erfassen einer Nicht-Betätigung einer Bremsbetätigungseinrichtung 10 des Kraftfahrzeugs 1 während des Stillstands mittels der Erfassungseinrichtung 4. Es erfolgt das Erfassen einer Blickabwendung 11 eines Fahrers 12 des Kraftfahrzeugs 1 von der Fahraufgabe, insbesondere von der Straße, auf welcher sich das Kraftfahrzeug 1 befindet, während des Stillstands über einen vorgegebenen Zeitraum mittels der weiteren Erfassungseinrichtung 5, beispielsweise in Form einer Innenraumkamera. Es wird ein Steuersignal 13 für die zumindest eine Funktionseinrichtung 6 des Assistenzsystems 2 in Abhängigkeit von der erfassten Nicht-Betätigung und der erfassten Blickabwendung 11 mittels der elektronischen Recheneinrichtung 3 erzeugt. Es erfolgt dann das Ansteuern der Funktionseinrichtung 6 in Abhängigkeit von dem erzeugten Steuersignal 13.

Insbesondere kann dabei vorgesehen sein, dass eine Warneinrichtung als Funktionseinrichtung 6 zum Warnen des Fahrers 12 angesteuert wird. Beispielsweise kann eine akustische Warnung mittels der Warneinrichtung erzeugt werden. Ferner kann auch eine haptische Warnung, beispielsweise an einem Lenkrad des Kraftfahrzeugs 1, mittels der Warneinrichtung erzeugt werden. Ferner kann auch eine Auto-Holdfunktion des Kraftfahrzeugs 1 als Funktionseinrichtung 6 angesteuert werden.

Ebenfalls kann vorgesehen sein, dass während des Stillstands des Kraftfahrzeugs 1 die Umgebung 8 des Kraftfahrzeugs 1 überwacht wird und eine Risikobewertung einer aktuellen Verkehrssituation in Abhängigkeit von der Überwachung durchgeführt wird. Es kann dann in Abhängigkeit von der Risikobewertung entschieden werden, welche Funktionseinrichtung 6 bei zumindest zwei Funktionseinrichtungen 6 angesteuert wird. Weiterhin kann auch in Abhängigkeit von einem Betriebsmodus des Assistenzsystems 2 entschieden werden, welche Funktionseinrichtung 6 bei zumindest zwei Funktionseinrichtungen angesteuert wird.

Insbesondere beschreibt somit die Erfindung, dass sich das Kraftfahrzeug 1 in dem Stillstand befindet. Bei einem ersten Fall, bei welchem ein Fahrerassistenzsystem zur Abstand- und Geschwindigkeitsregelung nicht aktiv ist, wird überprüft, ob eine gefährliche Situation beim Losrollen des Kraftfahrzeugs 1 wahrscheinlich ist. Dies kann beispielsweise mithilfe der Umgebungserfassungseinrichtung 7, beispielsweise Kamera, Radar oder LIDAR sowie eine Lokalisierung, beispielsweise zusätzlich Navigationsdaten sowie Schwarmdaten, geprüft werden, ob sich beispielsweise ein Hindernis vor dem Kraftfahrzeug 1 befindet, beispielsweise das weitere Kraftfahrzeug 9 oder auch Fußgänger, oder das Kraftfahrzeug 1 das erste an einem Bahnübergang oder einer Ampel ist. Gegebenenfalls kann hier auch noch einbezogen werden, ob die Schranken entsprechend abgesenkt sind oder die Ampel rot ist.

Es erfolgt dann insbesondere eine Messung eines Zeitraums, ab wann der Fahrer 12 ein Losrollen nicht erkennen würde, da er in einen bestimmten Bereich des Kraftfahrzeugs 1 schaut, beispielsweise einer Rücksitzbank oder einen Fußraum. Es erfolgt somit die Detektion der Blickabwendung 11 mithilfe beispielsweise einer Fahrerbeobachtungskamera beziehungsweise einer Innenraumkamera.

Bei einem ersten Ausgestaltung des ersten Falls kann eine gefährliche Situation bestimmt werden, sodass nach parametrierbarer Dauer im Stillstand und parametrierbarer Dauer der Blickabwendung 11 die sogenannte Auto-Holdfunktion temporär eingelegt wird bis zur Weiterfahrt durch die Gasbetätigung oder erneuten Blick nach vorne. So wird ein Losrollen durch versehentliches Lösen des Fußes von der Bremseinrichtung 10 verhindert.

Die zweite Situation im ersten Fall ist, dass beispielsweise eine gefährliche Situation vorliegt. Sobald ein Losfahren durch Lösen der Bremse und ohne Betätigen des Gaspedals erkannt wird, erfolgt die Ausgabe eines Warntons und/oder einer Vibration, falls die Hände am Lenkrad sind. Zusätzlich nach einer jeweils anders als bei der gefährlichen Situation parametrierbarer Dauer im Stillstand und nach Dauer der Blickabwendung 11 kann das Auto-Hold temporär bis zur Weiterfahrt durch die Gasbetätigung oder erneuten Blick nach vorne eingelegt werden.

Der alternative Fall beschreibt insbesondere, dass die Abstand- und Geschwindigkeitsregelung des Assistenzsystems 2 aktiv ist, und beispielsweise hat diese das Kraftfahrzeug 1 zum Stillstand gebracht und kann bei Weiterfahrt des weiteren Kraftfahrzeugs 9 und detektierten Händen am Lenkrad allein wieder anfahren. Anders als bei den vorherigen Fällen kann die parametrierbare Dauer im Stillstand und die parametrierbare Dauer der Blickabwendung 11 ein Anfahren des Assistenzsystems 2 unterbinden bis zur Weiterfahrt durch beispielsweise eine Gaspedalbetätigung oder nach erneutem Blick nach vorne. Statt des Anfahrens kann beispielsweise die Warneinrichtung einen akustischen Warnton, eine Vibration sowie optional ein Pop-up erzeugen, sobald das Kraftfahrzeug 1 wieder angefahren wäre.

### Bezugszeichenliste

- 1: Kraftfahrzeug
- 2: Assistenzsystem
- 3: elektronische Recheneinrichtung
- 4: Erfassungseinrichtung
- 5: weitere Erfassungseinrichtung
- 6: Funktionseinrichtung
- 7: Umgebungserfassungseinrichtung
- 8: Umgebung
- 9: weiteres Kraftfahrzeug
- 10: Bremsbetätigungseinrichtung
- 11: Blickabwendung
- 12: Fahrer
- 13: Steuersignal

## Patentansprüche

1. Verfahren zum Betreiben eines Assistenzsystems (2) eines Kraftfahrzeugs (1), mit den Schritten:
- Bestimmen eines Stillstands des Kraftfahrzeugs (1) in einem aktiven Fahrbetrieb des Kraftfahrzeugs (1) mittels einer elektronischen Recheneinrichtung (3) des Assistenzsystems (2);
- Erfassen einer Nicht-Betätigung einer Bremsbetätigungseinrichtung (10) des Kraftfahrzeugs (1) während des Stillstands mittels einer Erfassungseinrichtung (4) des Assistenzsystems (2);
- Erfassen einer Blickabwendung (11) eines Fahrers (12) des Kraftfahrzeugs (1) von einer Fahraufgabe während des Stillstands über einen vorgegebenen Zeitraum mittels einer weiteren Erfassungseinrichtung (5) des Assistenzsystems (2);
- Erzeugen eines Steuersignals (13) für zumindest eine Funktionseinrichtung (6) des Assistenzsystems (2) in Abhängigkeit von der erfassten Nicht-Betätigung und der erfassten Blickabwendung (11) mittels der elektronischen Recheneinrichtung (3); und
- Ansteuern der Funktionseinrichtung (6) in Abhängigkeit von dem erzeugten Steuersignal (13).

2. Verfahren nach Anspruch 1,
**dadurch gekennzeichnet, dass**
eine Warneinrichtung als Funktionseinrichtung (6) zum Warnen des Fahrers (12) angesteuert wird.

3. Verfahren nach Anspruch 2,
**dadurch gekennzeichnet, dass**
eine akustische Warnung mittels der Warneinrichtung erzeugt wird.

4. Verfahren nach Anspruch 2 oder 3,
**dadurch gekennzeichnet, dass**
eine haptische Warnung mittels der Warneinrichtung erzeugt wird.

5. Verfahren nach einem der vorhergehenden Ansprüche,
**dadurch gekennzeichnet, dass**
eine Auto-Hold Funktion des Kraftfahrzeugs (1) als Funktionseinrichtung (6) angesteuert wird.

6. Verfahren nach einem der vorhergehenden Ansprüche,
**dadurch gekennzeichnet, dass**
während des Stillstands des Kraftfahrzeugs (1) eine Umgebung (8) des Kraftfahrzeugs (1) überwacht wird und eine Risikobewertung einer aktuellen Verkehrssituation in Abhängigkeit von der Überwachung durchgeführt wird.

7. Verfahren nach Anspruch 6,
**dadurch gekennzeichnet, dass**
in Abhängigkeit von der Risikobewertung entschieden wird, welche Funktionseinrichtung (6) bei zumindest zwei Funktionseinrichtungen (6) angesteuert wird.

8. Verfahren nach einem der vorhergehenden Ansprüche,
**dadurch gekennzeichnet, dass**
in Abhängigkeit von einem Betriebsmodus des Assistenzsystems (2) entschieden wird, welche Funktionseinrichtung (6) bei zumindest zwei Funktionseinrichtungen (6) angesteuert wird.

9. Computerprogrammprodukt mit Programmcodemitteln, welche eine elektronische Recheneinrichtung (3) dazu veranlassen, wenn die Programmcodemittel von der elektronischen Recheneinrichtung (3) abgearbeitet werden, ein Verfahren nach einem der Ansprüche 1 bis 8 durchzuführen.

10. Assistenzsystem (2) für ein Kraftfahrzeug (1), mit zumindest einer elektronischen Recheneinrichtung (3), einer Erfassungseinrichtung (4), einer weiteren Erfassungseinrichtung (5) und einer Funktionseinrichtung (6), wobei das Assistenzsystem (2) zum Durchführen eines Verfahrens nach einem der Ansprüche 1 bis 8 ausgebildet ist.
